Europäisches Patentamt

**European Patent Office**

**Office européen des brevets**

(11) Numéro de publication: **0 241 424 B1**

(12) **FASCICULE DE BREVET EUROPEEN**

(45) Date de publication du fascicule du brevet: 21.03.90

(51) Int. Cl.⁴: **G01F 1/68**

(21) Numéro de dépôt: **87810199.7**

(22) Date de dépôt: **02.04.87**

(54) **Procédé pour déterminer le débit d'un fluide.**

(30) Priorité: **08.04.86 CH 1369/86**

(43) Date de publication de la demande: **14.10.87 Bulletin 87/42**

(45) Mention de la délivrance du brevet: **21.03.90 Bulletin 90/12**

(84) Etats contractants désignés: **AT BE CH DE ES FR GB GR IT LI LU NL SE**

(56) Documents cités:
EP-A- 0 070 801
EP-A- 0 079 542
FR-A- 2 436 974

(73) Titulaire: **BATTELLE MEMORIAL INSTITUTE, 7 route de Drize, CH-1227 Carouge/Genève(CH)**

(72) Inventeur: **Noir, Dominique, 9, Chemin du Jura, CH-1170 Aubonne(CH)**
Inventeur: **Prost, Jean-Louis, 3, Rue de l'Université, CH-1205 Genève(CH)**

(74) Mandataire: **Dousse, Blasco et al, 7, route de Drize, CH-1227 Carouge/Genève(CH)**

## Description

La présente invention se rapporte à un procédé pour déterminer le débit d'un fluide s'écoulant dans un conduit par la mesure de la température de ce fluide ainsi que par celle du temps nécessaire pour qu'une sonde, portée à une première température, différente de celle du fluide, soit amenée à une seconde température plus proche de celle de ce fluide.

Il a déjà été proposé différentes solutions pour déterminer le débit d'un fluide dans un conduit à partir de l'échange thermique entre une sonde et ce fluide. En général, il s'agit d'une sonde dont on mesure la variation de résistance électrique en fonction de la température. C'est un principe dérivé de celui de l'anémomètre à fil chaud.

Un tel débitmètre est décrit notamment dans le brevet GB-A 1 345 324. Selon ce brevet, la puissance de chauffage de la sonde est fournie par un train d'impulsions identiques séparées par des intervalles suffisamment longs pour garantir que la sonde est ramenée à sa température d'équilibre avec le fluide au début de chaque impulsion. Les variations de débit sont détectées par les variations enregistrées d'une impulsion à l'autre dans la vitesse de changement de résistance électrique de la sonde durant une impulsion. Cette vitesse de changement de résistance est donnée par la variation de tension dérivée d'une thermistance immergée dans le fluide. Cette tension est appliquée à un convertisseur tension-fréquence dont la fréquence diminue continûment en fonction de la diminution progressive de tension. Ensuite, on mesure la fréquence résultant pendant la durée de l'impulsion et on déduit le débit.

Du point de vue électronique, la plus grande partie du traitement de signal est analogique, ce qui conduit à un circuit électronique relativement complexe et par conséquent relativement cher. En outre, la transformation de la tension en fréquence variable couvre une plage de mesure assez réduite. Cette remarque est d'ailleurs aussi vraie en ce qui concerne les impulsions de chauffage à puissance constante.

On a proposé d'apporter une simplification à cette solution en mesurant un écart de temps entre deux seuils de température déterminés et en calculant ensuite le débit à l'aide d'équations exponentielles. De telles solutions sont décrites notamment dans le US-A 3 498 128 et dans le EP-AI 0 070 801.

Outre le fait que la résolution d'équations exponentielles constitue, du point de vue de l'électronique, encore une solution relativement complexe, il est apparu que ces courbes exponentielles de refroidissement de la sonde varient non seulement suivant le débit de fluide, mais également en fonction de la température de ce fluide, d'où la nécessité de tenir compte de la température dans la résolution de ces équations.

Les compteurs de consommation d'énergie thermique classiques mesurent d'une part, l'écart de température entre l'entrée et la sortie de l'appareil de chauffage et, d'autre part, le débit par un compteur d'eau classique à turbine. Dans ce type d'appareil, si la précision de mesure du débit est satisfaisante aux débits élevés, elle devient médiocre aux faibles débits (en dessous de 10-20% du débit nominal) qui sont les plus fréquents dans les installations de chauffage central.

Il existe un marché dans le domaine des compteurs de consommation d'énergie thermique distribuée sous forme d'un fluide, notamment dans le domaine des compteurs de consommation d'eau chaude d'une installation collective de chauffage central ou de distribution d'eau chaude sanitaire. Encore faut-il que le prix du compteur soit acceptable, c'est-à-dire qu'il soit amorti en quelques années de chauffage par les économies qu'il pourra entraîner, consécutivement à la répartition effective des charges en fonction de l'énergie consommée et non plus au prorata du volume habité. Ce mode d'imputation des charges constitue en effet une incitation à l'économie dans la mesure où chacun est seul responsable de sa propre consommation. Un tel mode d'imputation devient légalement obligatoire, au moins pour les logements neufs, dans certains pays.

Le but de la présente invention est prévisément d'apporter une solution tout à la fois précise et suffisamment simple pour être applicable aux domaines susmentionnés, où le prix et la précision sont deux éléments qui doivent être conciliables, aussi bien qu'à des domaines industriels et à d'autres fluides que les liquides, notamment à la vapeur.

A cet effet, cette invention a pour objet un procédé de détermination du débit d'un fluide selon la revendication 1.

La base utilisée dans le cadre de ce procédé est la même que celle des solutions connues, à savoir, la température du fluide et l'écart de temps entre deux seuils de température après avoir fourni à la sonde une impulsion d'énergie qui porte sa température à une valeur différente de celle du fluide. La différence réside dans la méthode de double interpolation qui est simple à réaliser sur le plan électronique, et qui permet de tenir compte de la variation entre les courbes exponentielles aux différents débits et températures, garantissant de ce fait une précision de l'ordre de 1 à 2% environ.

Le dessin annexé illustre, schématiquement et à titre d'exemple, une mise en oeuvre du procédé objet de la présente invention.

La fig. 1 représente un diagramme des écarts de temps en fonction du débit pour deux températures différentes du fluide.

La fig. 2 illustre le schéma-bloc de l'électronique de traitement du signal de mesure.

La fig. 3 illustre un schéma-bloc d'une variante de l'électronique de la fig. 2.

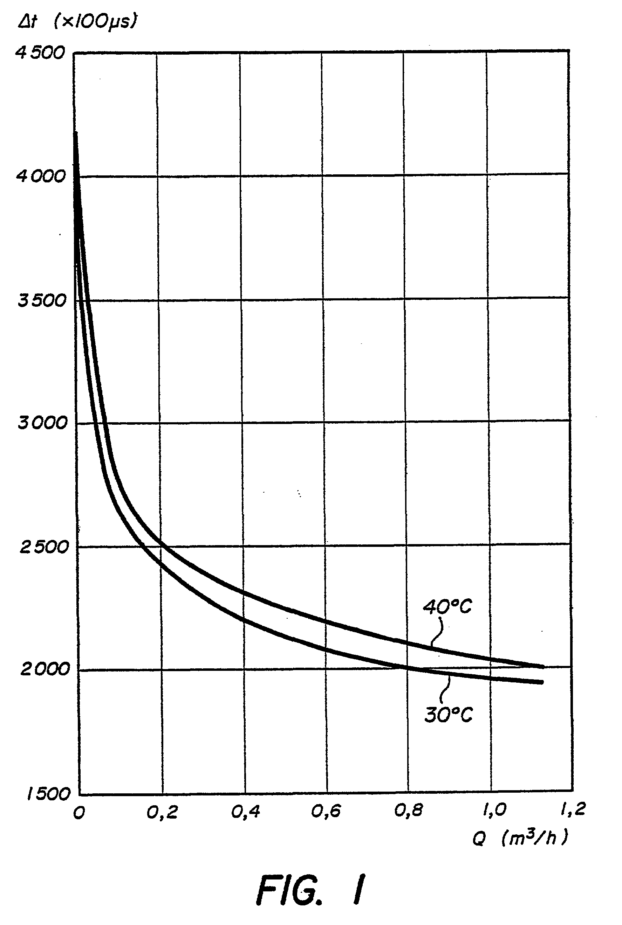

Le diagramme de la fig. 1 donne le débit en m³/h porté en abscisse en fonction des écarts de temps, dont l'unité est ici 100 μs, portés en ordonnée. Sur ce diagramme, on a porté les écarts de temps nécessaires au refroidissement d'une sonde chauffée à 15°C au-dessus de la température du fluide pour qu'elle atteigne un second seuil de température plus proche de la température du fluide. On voit sur ce diagramme deux courbes obtenues à partir de fluides dont les températures sont respectivement de 30°C et 40°C. Ce diagramme montre clairement que l'écart de temps mesuré ne dépend pas seulement du débit mais aussi, de façon non négligeable, de la température du fluide, d'où l'imprécision importante qui en résulte en utilisant des équations exponentielles.

On établit un tableau comportant n colonnes de températures croissantes, par exemple pour un circuit d'eau chaude tous les 10°C entre 20°C et 90°C, et x lignes de débits croissants entre 0 et 1,1 m³/h avec des invervalles de 0,1 m³/h, dans lequel on porte les valeurs de références des écarts de temps caractéristiques mesurés pour passer des températures $T_1$ à $T_2$. Ce tableau constitue la référence. Le débit nul de ce tableau permet un étalonnage de la sonde, puisqu'il suffit de mesurer le temps de refroidissement de cette sonde entre les températures $T_1$ et $T_2$ dans un fluide de température connue et de comparer ce temps à celui du tableau de référence. Un facteur de correction peut ainsi être déterminé pour tenir compte de la différence entre la valeur de référence et celle de la sonde.

Le tableau ci-dessus illustre, à titre d'exemple, les écarts de temps pour deux températures du fluide en fonction des débits allant de 0 à 1,1 m³/h. Il est évident que ce tableau peut être complété pour d'autres températures, le principe de détermination du débit restant le même.

**Tableau de référence**

| $Q=m^3/h/^{\circ}C$ | 30° | 40° |
|---|---|---|
| 0 | 4050 | 4180 |
| 0,1 | 2660 | 2740 |
| 0,2 | 2425 | 2515 |
| 0,3 | 2300 | 2395 |
| 0,4 | 2200 | 2315 |
| 0,5 | 2130 | 2250 |
| 0,6 | 2080 | 2195 |
| 0,7 | 2035 | 2145 |
| 0,8 | 2000 | 2110 |
| 0,9 | 1980 | 2065 |
| 1,0 | 1960 | 2035 |
| 1,1 | 1945 | 2010 |

La valeur de l'unité d'écart de temps qui est ici de 100 μs est déterminée en fonction de la précision désirée. Comme la pente des courbes diminue fortement lorsque le débit augmente, cette unité de temps est choisie pour avoir au moins une unité par % de débit au débit le plus élevé et à la température la plus basse où la sensibilité est la plus faible. Comme on le voit sur le tableau à 30°C, entre les débits 1,0 et 1,1 m³/h on a 15 unités de temps soit 1,5 unité par % de débit.

L'exploitation de ce tableau est réalisée à l'aide d'une double interpolation. Supposons que l'on mesure une température du fluide de 37°C et un écart de temps de 2225 unités entre les températures $T_1$ et $T_2$. La première l'opération consiste à calculer les écarts de temps pour une température de 37°C. On obtiendra notamment:

$$2200 + \frac{(2315 - 2200) \cdot 7}{10} = 2280$$

pour un débit de 0,4 m³/h et

$$2130 + \frac{(2250-2130) \cdot 7}{10} = 2214$$

pour un débit de 0,5 m³/h.

La seconde opération consiste à identifier les deux valeurs encadrant l'écart de temps mesuré et à interpoler entre ces deux valeurs dans notre exemple 2280 à 0,4 m³/h et 2214 à 0,5 m³/h.pour obtenir le débit Q:

$$Q = (0,5-x) m3/h$$

$$\frac{2225 - 2214}{2280 - 2214} = \frac{x}{0,1}$$

$$\frac{11}{66} = \frac{x}{0,1} \qquad 0,1\ m^3/h = 6\ x$$

$$Q = 0,5 - 0,016 = 0,484\ m^3/h.$$

Bien que les fonctions ne soient pas linéaires comme on l'a vu, on constate que l'erreur qui peut être introduite par cette méthode d'interpolation est extrêmement faible au niveau du calcul, compte tenu des intervalles réduits entre les valeurs du tableau. Dans le cas de l'exemple choisi, le tableau comporte 12 lignes et 8 colonnes (entre 20°C et 90°C), de sorte qu'il n'y a cependent que 96 valeurs de quatre chiffres chacune à mémoriser, ce qui nécessite une faible capacité-mémoire et, par conséquent, des composants peu coûteux, ce qui est important dans le cas d'applications domestiques en particulier.

Pour effectuer ce type de mesure, il est important d'utiliser une sonde présentant une faible capacité thermique ainsi qu'une faible constante de temps. Le choix s'est porté, pour l'application au débitmètre, sur une sonde au platine dont le coefficient de variation de la résistance électrique en fonction de la température est positif, constant et égal à 0,385%/°C. Pour l'application considérée et afin de satisfaire aux exigences susmentionnées, le choix s'est porté sur une sonde de faibles dimensions constituée par une couche mince déposée sur un support et non recouverte par une enveloppe de protection en céramique, verre ou métal. De telles sondes sont disponibles dans le commerce. Il s'agit par exemple de sondes Degussa, typen F 2101, Minco, type S260 PD, Heraeus, type 1 Pt 100 FKG 1030.6 ou Jumo type PC 1.32 10.1. Les dimensions de cette sonde sont, à titre d'exemple, 10 x 3 x 1 (mm, L x l x e) et la constante de temps est de l'ordre de 0,3 s dans l'eau à 0,2 m/s.

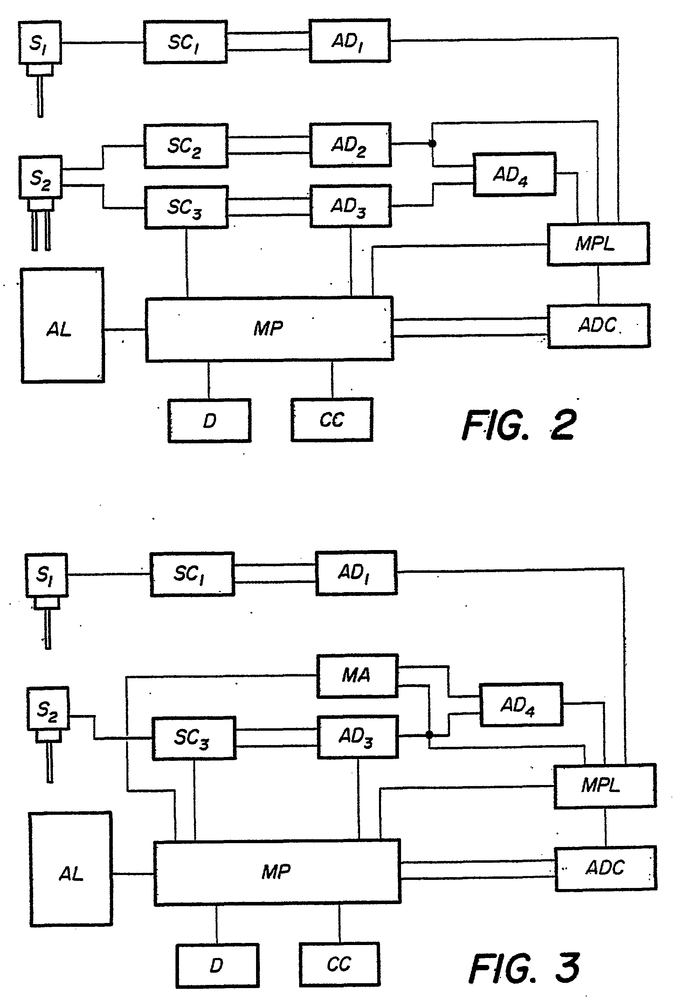

Le schéma-bloc de la fig 2, illustrant l'application du procédé à un compteur de chaleur, comporte deux sondes $S_1$ et $S_2$ disposées respectivement dans le conduit d'entrée et dans celui de sortie d'un circuit de chauffage central. La sonde $S_1$ ne mesure que la température d'entrée du fluide, et est reliée à cet effet à une source de courant de mesure $SC_1$ de 5mA qui engendre un échauffement inférieur à 0,05°C en eau calme. Un amplificateur différentiel $AD_1$ amplifie le signal de mesure et le transmet à un multiplexeur MPL.

La sonde $S_2$ est double comme illustré par la fig. 2. L'un des éléments de cette sonde est connecté à une source de courant $SC_2$ qui, comme la source $SC_1$ fournit un courant continu de 5 mA, correspondant à un courant de mesure de la tension de cette sonde proportionnelle à la résistance, elle-même fonction de la température du fluide. L'autre élément de cette double sonde $S_2$ est connecté à une source $SC_3$ qui l'alimente alternativement avec un courant de chauffage de 150 mA et un courant de mesure de 5 mA pendant la période de refroidissement de cet élément par l'écoulement de fluide. Ces deux sources $SC_2$ et $SC_3$ sont connectées à deux amplificateurs différentiels $AD_2$ respectivement $AD_3$. Le second de ces amplificateurs $AD_3$ adapte son gain de 1 à 30 suivant que la source $SC_3$ est de 5 mA ou de 150 mA correspondant aux périodes de mesure respectivement de chauffage de l'élément de sonde $S_2$, afin que le gain résultant demeure constant. La source $SC_3$ et l'amplificateur $AD_3$ sont à cet effet reliés au microprocesseur MP qui comporte le programme fixant notamment la périodicité de la commutation entre le courant de mesure et le courant de chauffage, ainsi que celle des gains respectifs de l'amplificateur différentiel $AD_3$ synchronisés avec le courant de la source $SC_3$. Les deux amplificateurs différentiels $AD_2$, $AD_3$ sont connectés à un autre amplificateur différentiel $AD_4$, qui indique au multiplexeur MPL la valeur de l'intervalle de temps qui s'est écoulé pour que l'élément de sonde $S_2$, après avoir été chauffé, passe de la température $T_1$ à la température $T_2$, fournissant ainsi au microprocesseur l'écart de temps nécessaire au calcul d'interpolation susmentionné. La sortie de l'amplificateur différentiel $AD_2$ est encore connectée au multiplexeur MPL pour lui indiquer la température du fluide à la sortie de l'installation de chauffage. La sortie du multiplexeur est connectée au microprocesseur MP et à un convertisseur analogique-digital de 10 bits ADC, également connecté au microprocesseur MP dont les sorties vont vers un affichage D et une commande de contrôle CC. L'ensemble du circuit est alimenté par une alimentation générale AL. La commande de contrôle CC sert à choisir la valeur à faire apparaître sur l'unité d'affichage D.

Etant donné qu'il reçoit les températures d'entrée, de sortie et qu'il calcule le débit du fluide, le microprocesseur peut aussi calculer la consommation d'énergie en kW. Il est alors possible de choisir l'une de ces valeurs à faire apparaître en la choisissant à l'aide de la commande de contrôle CC.

Le schéma-bloc illustré par la figure 3 est une variante du précédent dans lequel la sonde $S_2$ ne comporte qu'un seul capteur et n'est de ce fait alimentée que par la source de courant $SC_3$, la source de courant $SC_2$ et l'amplificateur différentiel $AD_2$ étant supprimés. Dans ce cas, la source connecte alternativement sur une puissance de chauffage de 150 mA et sur une puissance de mesure de 5 mA. Après une interruption suffisante pour amener la sonde à la température du fluide, un nouveau cycle est précédé par la mesure de la température du fluide et sa mise en mémoire dans une mémoire analogique MA remplaçant le second capteur et gardant la valeur de tension proportionnelle à la résistance de la sonde $S_2$ caractéristique de la température du fluide. Cette mémoire est reliée d'une part au microprocesseur MP, d'autre part à l'amplificateur différentiel $AD_4$ et au multiplexeur MPL. Le reste du circuit est semblable à celui de la fig. 2.

## Revendications

1. Procédé pour déterminer le débit d'un fluide s'écoulant dans un conduit par la mesure de la température de ce fluide ainsi que par celle du temps nécessaire pour qu'une sonde, portée à une première température, différente de celle du fluide, soit amenée à une seconde température plus proche de celle de ce fluide, caractérisé par le fait que l'on indique, dans un tableau d'étalonnage comportant n colonnes de températures croissantes du fluide et x lignes de débits croissants, des écarts de temps correspondant au passage de la sonde de la première à la seconde desdites températures à des températures déterminées du fluide et caractéristiques de débits correspondants de ce fluide à ces températures déterminées respectives, on calcule par une première interpolation, les valeurs des écarts de temps caractéristiques de la température mesurée du fluide, on identifie les deux écarts de temps supérieur, respectivement inférieur à l'écart de temps mesuré et caractéristiques des débits supérieur, respectivement inférieur au débit recherché et on détermine par une seconde interpolation entre les deux écarts de temps calculés, à quelle valeur du débit correspond l'écart de temps mesuré.

2. Procédé selon la revendication 1, caractérisé par le fait que l'on effectue lesdites mesures de température avec une sonde dont la constante de temps est de l'ordre de 0,3 s dans de l'eau s'écoulant à 0,2 m/s.

3. Procédé selon la revendication 1, caractérisé par le fait que l'on chauffe ladite sonde à environ 15°C au-dessus de la température du fluide.

4. Procédé selon la revendication 1, caractérisé par le fait que l'on choisit l'unité de temps en fonction de la précision désirée pour l'interpolation, et compte tenu du plus faible écart de temps enregistré entre deux écarts de température successifs du tableau.

## Patentansprüche

1. Verfahren zur Bestimmung des Durchsatzes eines in eine Leitung abfließenden Fluids durch Messung der Temperatur dieses Fluids sowie der Zeit, die notwendig ist, daß ein Fühler, der eine erste Temperatur aufweist, die sich von der des Fluids unterscheidet, auf eine zweite, der Temperatur des Fluids nähere Temperatur gebracht wird, dadurch gekennzeichnet, daß man in einer Eichtabelle, die n Spalten der Temperaturanstiege des Fluids und x Reihen der Durchsatzanstiege aufweist, die Zeitabstände einträgt, die dem Weg der Sonde von der ersten zu der zweiten der genannten Temperaturen zu den für das Fluid bestimmten Temperaturen entspricht und charakteristisch für die Durchsätze ist, die dem Fluid bei den jeweiligen bestimmten Temperaturen entsprechen, daß man durch eine erste Interpolation die Werte der Zeitabstände berechnet, die für die für das Fluid gemessene Temperatur charakteristisch sind, daß man die beiden größeren bzw. kleineren Zeitabstände zu dem Zeitabstand identifiziert, der gemessen ist und der für die größeren bzw. kleineren Durchsätze zu dem ermittelten Durchsatz charakteristisch ist, und daß man durch eine zweite Interpolation zwischen den beiden errechneten Zeitabständen einen Durchsatzwert bestimmt, der dem gemessenen Zeitabstand entspricht.

2. Verfahren nach Anspruch 1, dadurch gekennzeichnet, daß man diese Temperaturmessungen mit einem Fühler durchführt, wobei die Zeit in der Reihenfolge von 0,3 s bei einer Wasserdurchflußmenge von 0,2 m/s liegt.

3. Verfahren nach Anspruch 1, dadurch gekennzeichnet, daß man den Fühler auf eine Umgebungstemperatur erhitzt, die 15°C oberhalb der Temperatur des Fluids liegt.

4. Verfahren nach Anspruch 1, dadurch gekennzeichnet, daß man die Zeiteinheit in Funktion von der für die Interpolation gewünschten Genauigkeit auswählt und den geringeren Zeitabstand von zwei in der Tabelle eingetragenen aufeinanderfolgenden Zeitabständen in Rechnung setzt.

**Claims**

1. A method of determining the rate of flow of a fluid flowing in a pipe by measuring the temperature of the fluid and also measuring the time needed for a probe, initially at a first temperature different from that of the fluid, to be brought to a second temperature closer to that of the fluid, characterised in that there are established, in a calibration table comprising n columns of increasing fluid temperatures and x rows of increasing flow rates, the time differences corresponding to the time taken by the probe to change from the first to the second temperature at determined temperatures of the fluid and for corresponding flow rates of the fluid at the respective determined temperatures, then in a first interpolation, the values of the time differences characteristic of the measured temperature of the fluid are calculated and, after identifying the two time differences respectively above and below the measured time difference, for flow rates greater and smaller respectively that the flow rate being tested, one calculates the flow rate value to which the measured time difference corresponds by a second interpolation between the two calculated time differences.

2. The method according to claim 1 or 2, characterised by performing the temperature measurements by means of a probe, the time constant of which is of the order of 0.3 s in water flowing at 0.2 m/s.

3. A method according to claim 1 or 2, characterised in that the probe is brought to the said first temperature by heating the probe to about 15°C above the temperature of the fluid.

4. A method according to claim 1 or 2, characterised by selecting the time unit for said time differences in relation to the degree of precision required for interpolation, and taking into account the smallest time difference recorded between two successive time differences of the table.

FIG. 1

FIG. 2

FIG. 3